# FASCICULE DE BREVET EUROPEEN

(11) **EP 3 317 884 B1**
(45) Date de publication et mention de la délivrance du brevet: **29.01.2020**
(21) Numéro de dépôt: 16734383.9
(22) Date de dépôt: 01.07.2016
(51) Int. Cl.: G21C 15/18, B01D 35/027, G21C 9/004

(54) **RÉACTEUR NUCLÉAIRE AVEC UN DISPOSITIF DE FILTRATION DANS LE RÉSERVOIR IRWST**
KERNREAKTOR MIT EINER FILTRIERVORRICHTUNG IM IRWST-TANK
NUCLEAR REACTOR COMPRISING A FILTRATION DEVICE IN THE IRWST TANK

(30) Priorité: 03.07.2015 FR 1556342
(43) Date de publication de la demande: 09.05.2018
(73) Titulaire: FRAMATOME, 92400 Courbevoie (FR)
(72) Inventeur: LOYAT, Patrick, 78570 Andresy (FR); WEILER, Adrien, 75012 Paris (FR); ZAHRI, Nasser, 95210 Saint-Gratien (FR)
(74) Mandataire: Lavoix
(86) Numéro de dépôt international: PCT/EP2016/065614
(87) Numéro de publication internationale: WO 2017/005664

(56) Documents cités:
- EP-A2- 0 151 531
- JP-A- H07 248 392

## Description

L'invention concerne en général la sureté des réacteurs nucléaires, notamment les moyens permettant le recyclage de liquides s'écoulant à l'intérieur du bâtiment réacteur en cas d'accident.

Plus précisément, l'invention concerne un réacteur nucléaire comprenant :
- un bâtiment réacteur ;
- une cuve logée dans le bâtiment réacteur ;
- un cœur disposé dans la cuve et comportant des assemblages de combustible nucléaire ;
- un réservoir de stockage d'eau, située dans le bâtiment réacteur, le réservoir étant délimité, par un fond et des parois latérales, le réservoir ayant au moins une ouverture permettant l'écoulement d'un flux de liquide à l'intérieur du réservoir en cas d'accident ;
- un circuit de refroidissement d'urgence du cœur, comprenant un organe de transfert ayant une aspiration en communication fluidique avec le réservoir ;
- un dispositif de filtration du flux de liquide, disposé dans le réservoir, et interposé entre l'ouverture et l'aspiration de l'organe de transfert.

Un tel réacteur est connu de CN 103028285. Ce document décrit que le dispositif de filtration comporte un panier filtrant de grand volume, disposé sous une ouverture ménagée dans le plafond du réservoir. Ce panier doit être fixé au génie civil, notamment au fond et aux parois latérales du réservoir. Du fait de la taille du panier et du chargement à considérer, la tenue au séisme du dispositif de filtration est difficile à justifier.

Dans ce contexte, l'invention vise à proposer un réacteur nucléaire dans lequel la tenue au séisme du dispositif de filtration est plus facile à justifier.

A cette fin, l'invention porte sur un réacteur nucléaire du type précité, caractérisé en ce que le dispositif de filtration comprend un volume filtrant délimité dans le réservoir sous l'ouverture, ouvert vers l'ouverture, le volume filtrant étant délimité d'un premier côté par la paroi latérale et d'un second côté opposé au premier par une paroi filtrante s'étendant jusqu'au fond et fixée à la paroi latérale.

Seule la tenue au séisme de la paroi filtrante doit être justifiée. Ceci est beaucoup plus facile que de justifier la tenue au séisme d'un panier de grande dimension.

L'invention consiste dans un réacteur nucléaire selon l'objet de la revendication 1. Entre autres, ce réacteur nucléaire comprend la caractéristique suivante:
- une paroi filtrante qui comprend une pluralité de poteaux rigidement fixés au fond, et une pluralité de panneaux filtrants interposés entre les poteaux et liés aux poteaux.

Le réacteur nucléaire peut en outre présenter une ou plusieurs des caractéristiques ci-dessous, considérées individuellement ou selon toutes les combinaisons techniquement possibles:
- le réservoir est délimité par un plafond, chaque poteau étant allongé suivant une direction longitudinale et présentant une extrémité longitudinale inférieure fixée au fond et une extrémité longitudinale supérieure liée au plafond par une liaison supérieure, la liaison supérieure conférant un seul degré de liberté à l'extrémité longitudinale supérieure par rapport au plafond, en translation suivant la direction longitudinale ;
- le dispositif de filtration comporte pour chaque poteau au moins une liaison articulée du poteau à la paroi latérale, la liaison articulée comprenant une barre liée par une articulation à la paroi latérale et par une autre articulation au poteau ;
- chaque panneau filtrant s'étend d'un premier des poteaux à un second des poteaux, ledit panneau filtrant étant délimité par un premier bord rigidement fixé au premier poteau et par un second bord lié au second poteau par une liaison glissante conférant deux degrés de liberté au panneau par rapport au second poteau, en translation parallèlement au fond et en translation parallèlement au second poteau ;
- le dispositif de filtration comporte, pour chaque panneau filtrant, un rail fixé au fond, un bord inférieur dudit panneau filtrant étant engagé dans le rail et étant libre de coulisser le long du rail ;
- le dispositif de filtration comporte une paroi filtrante annexe définissant avec la paroi filtrante un volume de filtration annexe interposé en aval du volume de filtration entre l'ouverture et l'aspiration de l'organe de transfert du circuit de refroidissement d'urgence du cœur, la paroi filtrante ayant une première maille, la paroi filtrante annexe ayant une seconde maille plus fine que la première ;
- le réservoir comporte plusieurs ouvertures, le volume filtrant s'étendant sous chaque ouverture et étant ouvert vers chaque ouverture, le volume filtrant définissant un espace entièrement communiquant ;
- la cuve est logé dans un puits délimité par une paroi à contour fermé, le réservoir entourant la paroi à contour fermé et le volume filtrant étant délimité du premier côté par ladite paroi à contour fermé ; et
- le réservoir est délimité par un plafond, la ou chaque ouverture étant ménagée dans le plafond.

EP0151531 montre un réacteur nucléaire avec un bâtiment réacteur comprenant une cuve et un coeur. Un puisard comprenant un dispositif de filtration est situé dans le bâtiment réacteur.

JPH07248392 montre des dispositifs pour protéger l'ouverture entre une chambre sèche et une chambre de suppression.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un réacteur nucléaire conforme à l'invention ;
- la figure 2 est une représentation en coupe du réacteur nucléaire de la figure 1, prise selon l'incidence des flèches II ;
- la figure 3 est une représentation schématique du dispositif de filtration de la figure 2 ;
- la figure 4 est une représentation schématique simplifiée, en perspective, de la paroi filtrante ; et
- la figure 5 est une représentation schématique simplifiée des différentes liaisons des poteaux de la paroi filtrante de la figure 4.

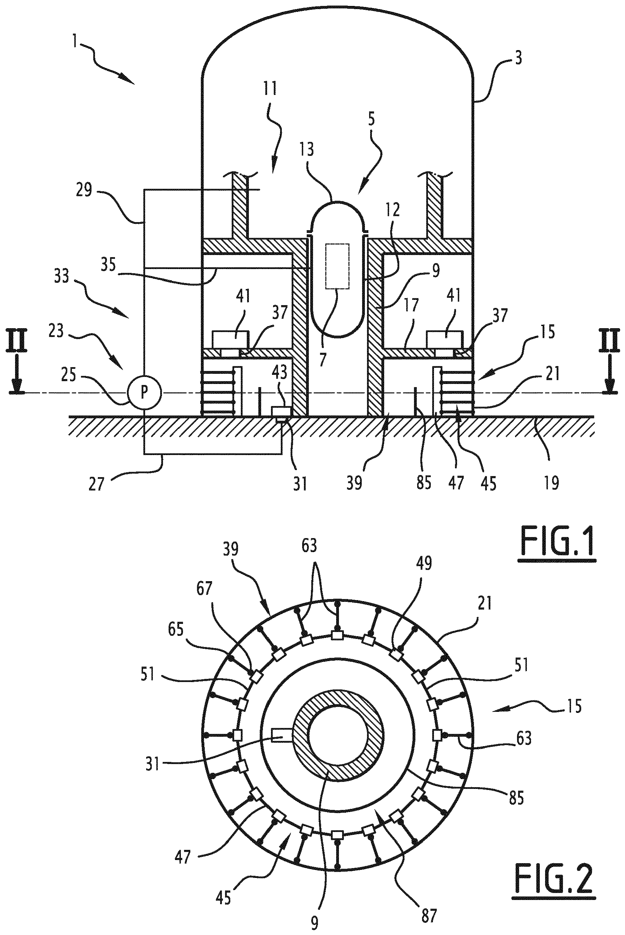

Le réacteur nucléaire 1 illustré sur la figure 1 comprend un bâtiment réacteur 3, une cuve 5 logée dans le bâtiment réacteur 3, et un cœur 7 disposé dans la cuve.

Le cœur 7 comporte des assemblages de combustible nucléaire, qui ne sont pas représentés.

Le réacteur nucléaire est de type PWR, BWR, ou de tout autre type.

Comme visible sur la figure 1, le bâtiment réacteur comporte des structures de génie civil. Parmi ces structures, on trouve le puits de cuve 9. Le puits de cuve est délimité par une paroi annulaire, typiquement en béton. La cuve 5 est disposée dans le puits de cuve 9.

Les structures de génie civil comportent encore une piscine 11, dans laquelle débouche une extrémité supérieure du puits de cuve 9.

Plus précisément, la cuve 5 comporte une partie inférieure 12 et un couvercle amovible 13. La partie inférieure 12 comporte une virole et un fond bombé inférieur solidaire de la virole. Le couvercle 13 est rigidement fixé à la partie inférieure 12 de la cuve pendant le fonctionnement du réacteur, c'est-à-dire pendant que celui-ci produit de l'énergie. Pour permettre la réalisation d'opérations de maintenance à l'intérieur de la cuve du réacteur, le couvercle 13 est susceptible d'être désolidarisé de la partie inférieure 12 de la cuve.

Comme illustré sur la figure 1, la partie inférieure 12 de la cuve est typiquement logée à l'intérieur du puits de cuve 9, et le couvercle 13 est située à l'intérieur de la piscine 11.

Pendant le fonctionnement normal du réacteur nucléaire, la piscine 11 est vide. Quand des interventions à l'intérieur de la cuve du réacteur sont nécessaires, par exemple pour remplacer certains assemblages de combustible, la piscine 11 est remplie d'eau. Le couvercle 13, après séparation d'avec la partie inférieure 12 de la cuve, est posé au fond de la piscine, par exemple sur un rack.

Le réacteur nucléaire 1 comporte encore un réservoir 15 de stockage d'eau, situé dans le bâtiment réacteur 3. Le réservoir 15 est typiquement situé à un niveau inférieur à celui de la cuve 5.

Le réservoir 15 est délimité en partie supérieure par un plafond 17, en partie inférieure par un fond 19, et par des parois latérales 21. Dans l'exemple représenté sur la figure 1, l'une des parois latérales délimitant le réservoir est le puits de cuve 9. Une autre des parois latérales 21 délimite le réservoir 15 à l'opposé du puits de cuve 9. Elle s'étend en cercle autour du puits de cuve 9.

Ce réservoir est fréquemment désigné par le sigle IRWST (In-containment Refueling Water Storage Tank ou réservoir de stockage d'eau pour rechargement en combustible).

En fonctionnement normal du réacteur, le réservoir 15 stocke un volume d'eau. Ce volume d'eau est transféré dans la piscine 11 pour permettre les opérations de maintenance du réacteur, notamment le remplacement des assemblages de combustible nucléaire. Pour ce faire, le réacteur comporte un circuit de transfert 23. Le circuit de transfert 23 comporte un organe de transfert tel qu'une pompe 25, dont l'aspiration est raccordée fluidiquement par une ligne 27 au réservoir 21. Le refoulement de la pompe est raccordé fluidiquement par une ligne 29 à la piscine 11. Comme visible sur la figure 1, le réservoir 15 présente à cet effet un puisard 31, situé en point bas du réservoir. La ligne d'aspiration 28 prélève l'eau dans le puisard 31.

Par ailleurs, le réacteur nucléaire comporte un circuit 33 de refroidissement d'urgence du cœur, comprenant un organe de transfert tel qu'une pompe ayant une aspiration en communication fluidique avec le réservoir 15.

Par exemple, l'organe de transfert est commun avec le circuit 23, comme représenté sur la figure 1. En variante, le circuit de refroidissement d'urgence possède un organe de transfert dédié, distinct de la pompe 25.

Dans l'exemple représenté, le circuit de refroidissement d'urgence 33 comprend une ligne 35, piquée en dérivation sur la ligne 29, et raccordée à la cuve 5.

Ainsi, en cas d'urgence, l'eau stockée dans le réservoir 15 peut être injectée dans le cœur du réacteur, de manière à refroidir celui-ci.

Par ailleurs, le réservoir 15 est prévu également pour collecter le liquide ruisselant à l'intérieur du bâtiment réacteur en cas d'accident, notamment en cas de fuite au niveau du circuit primaire du réacteur nucléaire. Par exemple, en cas de LOCA (Loss Of Coolant Accident ou accident de perte de refroidissement), le fluide primaire s'échappant du circuit primaire est collecté à l'intérieur du réservoir 15.

Pour ce faire, le réservoir 15 présente au moins une ouverture 37, permettant l'écoulement d'un flux de liquide à l'intérieur du réservoir 15 en cas d'accident.

Typiquement, le réservoir 15 comporte une pluralité d'ouvertures 37. Ces ouvertures sont par exemple disposées autour du puits de cuve 9, et à proximité de ce puits de cuve.

La ou chaque ouverture 37 est typiquement ménagée dans le plafond 17. En variante, la ou chaque ouverture 37 est ménagée dans les parois latérales. Selon une autre variante, les ouvertures 37 sont réparties entre le plafond 17 et les parois latérales 21.

Le réacteur nucléaire comporte encore un dispositif de filtration 39 du flux de liquide, disposé dans le réservoir 15, et interposé entre la ou les ouvertures 37 et l'aspiration de l'organe de transfert du circuit 33 de refroidissement d'urgence.

On entend par interposé, le fait que le liquide, dans son trajet depuis l'ouverture 37 jusqu'à l'aspiration de l'organe de transfert, passe nécessairement par le dispositif de filtration 39.

En effet, en cas d'accident, notamment en cas de LOCA, le fluide s'écoulant dans le bâtiment réacteur et collecté dans le réservoir 15 contient des débris, notamment des morceaux d'isolants thermiques. Ces débris doivent être piégés pour ne pas empêcher le fonctionnement de l'organe de transfert du circuit 33 de refroidissement d'urgence du cœur.

Comme visible sur la figure 1, en plus du dispositif de filtration 39, il est prévu une grille d'arrêt 41 au-dessus de chaque ouverture 37. La grille 41 permet d'arrêter les plus gros débris et d'empêcher ceux-ci de tomber à l'intérieur du réservoir 15. La grille 41 est à grosses mailles, et collecte typiquement environ 5% des débris entraînés par le flux de liquide s'écoulant dans le réservoir 15.

De plus, le puisard 31 est couvert par un filtre d'aspiration 43, qui empêche les débris qui ne seraient éventuellement pas arrêtés par le dispositif de filtration 39 d'être aspirés par l'organe de transfert du circuit de refroidissement d'urgence.

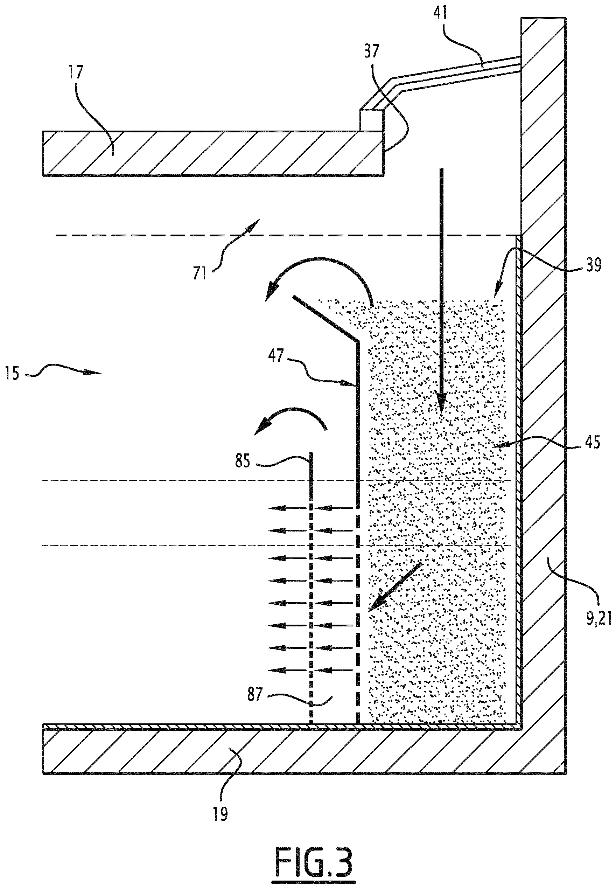

Comme visible de manière plus détaillée sur les figures 2 et 3, le dispositif de filtration 39 comporte un volume filtrant 45 délimité dans le réservoir 15, sous la ou les ouvertures 37. Le volume filtrant 45 est ouvert vers la ou les ouvertures 37. En d'autres termes, il est ouvert vers le haut.

Le volume filtrant 45 est délimité d'un premier côté par la ou une des parois latérales 21 du réservoir, et d'un second côté opposé au premier par une paroi filtrante 47. La paroi filtrante 47 s'étend jusqu'au fond 19 du réservoir, et est fixée à la paroi latérale 21 délimitant l'autre côté du volume filtrant.

Ainsi, le volume filtrant 45 est délimité vers le bas par le fond 19 du réservoir, latéralement par la paroi latérale 21 et par la paroi filtrante 47. Il est ouvert vers le haut.

Ainsi, et comme visible sur la figure 3, au cas où la paroi filtrante serait excessivement bouchée, le flux de liquide se déversant à l'intérieur du réservoir par la ou les ouvertures 37 peut déborder par-dessus la paroi filtrante 47.

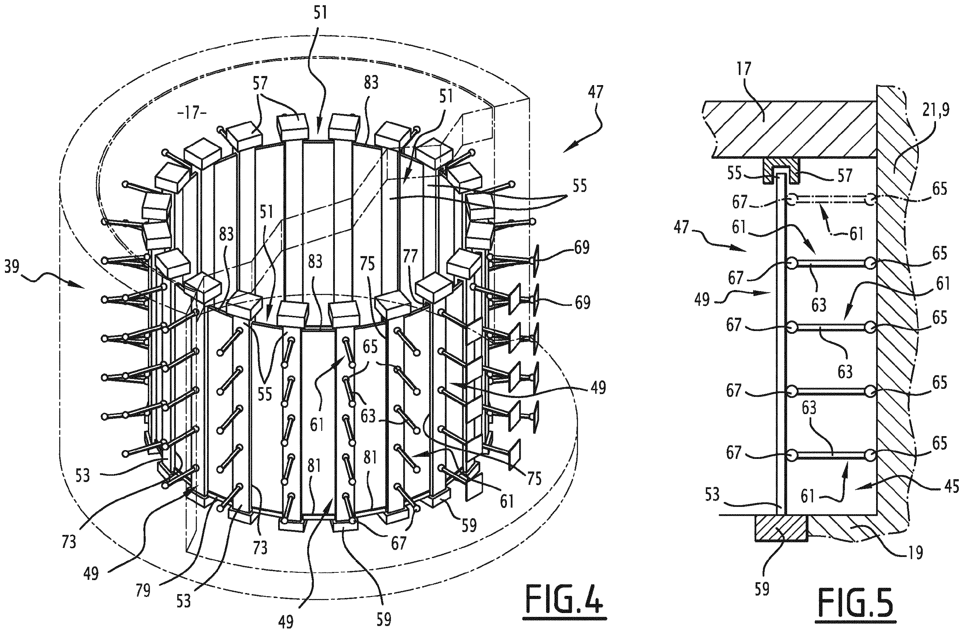

La paroi filtrante 47, comme représentée sur la figure 4, comprend une pluralité de poteaux 49 rigidement fixés au fond 19, et une pluralité de panneaux filtrants 51 interposés entre les poteaux 49 et liés aux poteaux 49.

Les poteaux 49 sont typiquement régulièrement espacés les uns des autres.

Chaque poteau 49 est allongé suivant une direction longitudinale et présente une extrémité longitudinale inférieure 53 rigidement fixée au fond 19. Selon une variante de réalisation, une extrémité longitudinale supérieure 55 de chaque poteau 49 est liée au plafond 17 par une liaison supérieure 57.

Typiquement, chaque poteau 49 est d'orientation verticale, et est sensiblement perpendiculaire au fond 19.

L'extrémité longitudinale inférieure 53 de chaque poteau n'a aucun degré de liberté par rapport au fond 19. Typiquement, l'extrémité longitudinale inférieure 53 de chaque poteau est rigidement fixée à une platine d'ancrage 59, noyée dans le fond 19.

La liaison supérieure 57 confère un seul degré de liberté à l'extrémité longitudinale supérieure 55 du poteau par rapport au plafond 17, en translation suivant la direction longitudinale. La liaison supérieure est réalisée de toute manière adaptée.

Ainsi, une expansion thermique de chaque poteau, vers le haut, est possible.

Par ailleurs, et comme visible sur les figures 4 et 5, le dispositif de filtration 39 comporte pour chaque poteau 49 au moins une liaison articulée 61 du poteau 49 à la paroi latérale 21. La liaison articulée 61 comprend une barre 63 liée par une articulation 65 à la paroi latérale 21 et par une autre articulation 67 au poteau 49.

Typiquement, le dispositif de filtration 39 comprend, pour chaque poteau 49, deux liaisons articulées 61 (voir l'illustration de la figure 4), ou trois liaisons articulées 61, (figure 5) et peut comporter en variante un nombre supérieur de liaisons articulées 61. Par exemple, toutes les liaisons articulées sont du même type.

Typiquement, les barres 63 sont des bras rigides, tous de même taille de manière à maintenir le poteau dans une orientation parallèle à la paroi 21. Les barres 63 sont typiquement parallèles entre elles, et d'orientation sensiblement horizontale. Elles sont de longueur ajustable. Par exemple, elles sont télescopiques.

L'articulation 65 est typiquement une liaison rotule. En variante, elle est d'un autre type.

De même, l'articulation 67 est typiquement une liaison rotule. En variante, elle est d'un autre type.

Sur la figure 4, chaque barre 63 est typiquement liée par l'articulation 65 à une platine 69 noyée dans la paroi latérale 21.

Selon une variante de réalisation représentée en traits interrompus sur la figure 5, l'extrémité longitudinale supérieure 55 de chaque poteau 49 n'est pas liée au plafond 17, mais est liée à la paroi latérale 21. Dans ce cas, elle est liée à la paroi 21 par une liaison articulée 61 telle que décrit plus haut.

Comme visible sur la figure 4, chaque panneau filtrant 51 s'étend d'un premier des poteaux 49 jusqu'à un second des poteaux 49. Ainsi, il occupe tout l'espace séparant les premier et second poteaux 49 l'un de l'autre, à l'exception d'une zone située immédiatement sous le plafond, référencée 71. Cette zone permet le débordement du liquide au-dessus du panneau filtrant 51.

Chaque panneau filtrant 51 est délimité par un premier bord longitudinal 73, rigidement fixé au premier poteau 49. Ce bord 73 est par exemple soudé au premier poteau 49, ou rigidement fixé par tout autre moyen.

Chaque panneau 51 comporte également un second bord longitudinal 75, lié au second poteau par une liaison glissante 77. Les premier et second bords 73, 75 sont typiquement parallèles l'un à l'autre.

La liaison glissante 77 confère deux degrés de liberté au panneau filtrant 51 par rapport au second poteau 49, en translation parallèlement au fond 19, et en translation longitudinalement parallèlement au second poteau 49.

Par exemple, la liaison glissante 77 comporte un rail d'orientation longitudinale solidaire du second poteau 49, le second bord longitudinal 75 du panneau filtrant 51 étant engagé dans le rail et libre de coulisser le long du rail.

Le dispositif de filtration 39 comporte encore, pour chaque panneau filtrant 51, un rail 79 fixé au fond 19, un bord inférieur 81 dudit panneau étant engagé dans le rail 79. Le bord inférieur 81 est libre de coulisser le long du rail 79.

Ainsi, chaque panneau filtrant 51 est libre de s'expanser thermiquement verticalement vers le haut et également transversalement vers le second poteau 49.

On crée ainsi une liaison filtrante entre chaque panneau filtrant 51 et le fond 19. On entend par « liaison filtrante » une liaison permettant l'écoulement du liquide, mais par le passage des débris solides.

Le bord supérieur 83 du panneau filtrant 51 est libre, et délimite avec le plafond la zone 71 permettant le débordement du liquide.

Chaque panneau filtrant 51 comporte une zone filtrante, pourvue d'une multitude d'orifices de maille adaptée pour arrêter les débris. La zone filtrante, typiquement, s'étend sur presque toute la surface du panneau filtrant 51.

Chaque panneau filtrant 51 est par exemple formé de plusieurs éléments filtrants, fixés les uns aux autres. Les éléments filtrants comportent chacun une zone filtrante et couvrent chacun une partie de la surface du panneau.

En variante, chaque panneau est d'une pièce, formé d'un seul élément filtrant.

Comme visible sur les figures 2 et 3, le dispositif de filtration 39 comporte encore une paroi filtrante annexe 85 définissant avec la paroi filtrante 47 un volume de filtration annexe 87. Ce volume de filtration annexe 87 est interposé en aval du volume de filtration 45, entre la ou les ouvertures 37 et l'aspiration de l'organe de transfert du circuit 33 de refroidissement d'urgence.

L'aval est ici entendu selon le sens de circulation du liquide depuis l'ouverture 37, à travers le réservoir 15 jusqu'au puisard 31.

La paroi filtrante 47 a une première maille, la paroi filtrante annexe 85 présentant des orifices ayant une seconde maille plus fine que la première. En d'autres termes, la paroi filtrante annexe peut arrêter des débris de plus petite taille que la paroi filtrante 47. Certains débris, qui ne sont pas arrêtés par la paroi filtrante 47, seront donc arrêtés par la paroi filtrante annexe 85. La paroi filtrante annexe 85 présente l'avantage d'arrêter les débris passant à travers la paroi filtrante 47, notamment en début d'opération, tant qu'une couche de débris suffisante ne s'est pas accumulée à l'intérieur du volume filtrant 45, contre la paroi filtrante. En effet, une telle couche augmente l'efficacité de la filtration par la paroi filtrante 47. Tant que cette couche ne s'est pas constituée, une plus grande proportion de débris passe à travers la paroi filtrante 47. La paroi de filtration annexe 85 permet d'arrêter ces débris, et de les piéger dans le volume de filtration annexe 87.

Typiquement, comme visible sur les figures 2, 3, la paroi filtrante annexe 85 s'étend parallèlement à la paroi filtrante 47. Elle est légèrement écartée de la paroi filtrante 47. Longitudinalement, la paroi filtrante annexe 85 est moins haute que la paroi filtrante 47.

Elle est constituée de toute façon adaptée.

Il est important de souligner que le volume filtrant 45 définit un espace entièrement communiquant, qui n'est pas cloisonné. Ainsi, les flux de liquide arrivant par chacune des ouvertures se déversent dans le même espace. Chaque flux peut se répartir dans tout le volume filtrant. Autrement dit, si le liquide ne pénètre que par une seule ouverture, quelle que soit cette ouverture, il va pouvoir se répartir dans tout le volume filtrant. Ceci est une différence importante par rapport à CN 103028285, ce document décrivant un panier dédié à chaque ouverture. Le volume total cumulé des paniers situés sous toutes les ouvertures doit dans ce cas être nettement supérieur au volume nécessaire avec l'invention. Par exemple, pour un réacteur nucléaire de type EPR (European Pressurized Reactor), quatre paniers du type de CN 103028285 sont disposés chacun sous une ouverture 37. Le cahier des charges impose de pouvoir collecter et retenir 56 m³ de débris, arrivant par au moins deux ouvertures. Chaque panier doit donc avoir un volume d'au moins 28 m³, les quatre paniers présentant ensemble un volume de 112 m³. Dans l'invention, du fait que les quatre ouvertures se déversent dans un même volume, il est possible de réduire de manière très significative le volume prévu pour retenir les débris.

Dans un exemple de réalisation illustré sur les figures, le volume filtrant est délimité d'un côté par la paroi latérale 21 situé à l'opposé du puits de cuve 9, et de l'autre côté par la paroi filtrante 47. Ladite paroi 21 s'étend circonférentiellement autour de tout le puits de cuve 9. La paroi filtrante 47 est donc agencée selon un contour fermé, par exemple un cercle, parallèle à la paroi latérale 21. Les poteaux 41 sont tous rigidement fixés à la paroi latérale 21.

Dans ce cas, la paroi filtrante annexe 85 est elle aussi agencée selon un contour fermé, par exemple un cercle, radialement à l'intérieur de la paroi filtrante 47.

En variante, le volume filtrant 45 ne s'étend pas tout autour du puits de cuve 9. Il ne s'étend que sur une fraction de la périphérie de ce puits de cuve.

Selon un autre exemple de réalisation, le volume filtrant 45 est délimité d'un côté par la paroi délimitant le puits de cuve 9, et de l'autre par la paroi filtrante 47. La paroi filtrante 47 est alors fixée à la paroi du puits de cuve.

Le réacteur nucléaire décrit ci-dessus présente de multiples avantages.

Comme indiqué plus haut, le fait que le volume filtrant soit délimité d'un premier côté par la ou une paroi latérale du réservoir et d'un second côté opposé au premier par la paroi filtrante, celle-ci s'étendant jusqu'au fond et étant fixée à la paroi latérale, permet de justifier la tenue au séisme de manière beaucoup plus simple que dans l'état de la technique.

Le fait de constituer la paroi filtrante par une pluralité de poteaux fixés au fond et par des panneaux filtrants, permet de distribuer la dilatation thermique sur des modules indépendants, chaque module correspondant à un poteau et un panneau. Dans l'invention, les liaisons du poteau au sol, à la paroi latérale et éventuellement au plafond, et du panneau au poteau et au sol, sont prévues pour permettre la dilatation.

Dans l'état de la technique, les paniers sont d'un bloc, de très grande taille, de telle sorte que la dilatation thermique est très importante.

Par construction, la paroi filtrante est nécessairement à courte distance de la paroi latérale du réservoir, de telle sorte que la tenue au séisme est plus facile à justifier. Par ailleurs, chaque poteau a une liaison à la fois au fond du réservoir, à la paroi latérale et éventuellement au plafond, ce qui contribue encore à faciliter la justification de la tenue au séisme. Plus précisément, ces dispositions constructives permettent de rapprocher le centre de gravité des points d'ancrage au sol, à la paroi latérale et au plafond.

Comme précisé plus haut, du fait que le volume filtrant définit un volume entièrement communiquant, il est possible de réduire le volume total nécessaire pour le stockage des débris.

L'invention a été décrite avec un dispositif de filtration comprenant à la fois une paroi filtrante et une paroi filtrante annexe. Toutefois, le dispositif de filtration peut être dépourvu de paroi filtrante annexe.

## Revendications

1. Réacteur nucléaire (1) comprenant :
- un bâtiment réacteur (3) ;
- une cuve (5) logée dans le bâtiment réacteur (3) ;
- un cœur (7) disposé dans la cuve (5) et comportant des assemblages de combustible nucléaire ;
- un réservoir (15) de stockage d'eau, située dans le bâtiment réacteur (3), le réservoir (15) étant délimité, par un fond (19) et des parois latérales (21, 9), le réservoir (15) ayant au moins une ouverture (37) permettant l'écoulement d'un flux de liquide à l'intérieur du réservoir (15) en cas d'accident ;
- un circuit (33) de refroidissement d'urgence du cœur (7), comprenant un organe de transfert (25) ayant une aspiration en communication fluidique avec le réservoir (15);
- un dispositif (39) de filtration du flux de liquide, disposé dans le réservoir (15), et interposé entre l'ouverture (37) et l'aspiration de l'organe de transfert (25),
le dispositif de filtration (39) comprenant un volume filtrant (45) délimité dans le réservoir (15) sous l'ouverture (37), ouvert vers l'ouverture (37), le volume filtrant (45) étant délimité d'un premier côté par la paroi latérale (9, 21) et d'un second côté opposé au premier par une paroi filtrante (47) s'étendant jusqu'au fond (19) et fixée à la paroi latérale (21,9).
la paroi filtrante (47) comprenant une pluralité de poteaux (49) rigidement fixés au fond (19), et une pluralité de panneaux filtrants (51) interposés entre les poteaux (49) et liés aux poteaux (49).

2. Réacteur nucléaire selon la revendication 1, **caractérisé en ce que** le réservoir (15) est délimité par un plafond (17), chaque poteau (49) étant allongé suivant une direction longitudinale et présentant une extrémité longitudinale inférieure (53) fixée au fond (19) et une extrémité longitudinale supérieure (55) liée au plafond (17) par une liaison supérieure (57), la liaison supérieure (57) conférant un seul degré de liberté à l'extrémité longitudinale supérieure (55) par rapport au plafond (17), en translation suivant la direction longitudinale.

3. Réacteur nucléaire selon la revendication 1 ou 2, **caractérisé en ce que** le dispositif de filtration (39) comporte pour chaque poteau (49) au moins une liaison articulée (61) du poteau (49) à la paroi latérale (21, 9), la liaison articulée (61) comprenant une barre (63) liée par une articulation (65) à la paroi latérale (21, 9) et par une autre articulation (67) au poteau (49).

4. Réacteur nucléaire selon l'une quelconque des revendications 1 à 3, **caractérisé en ce que** chaque panneau filtrant (51) s'étend d'un premier des poteaux (49) à un second des poteaux (49), ledit panneau filtrant (51) étant délimité par un premier bord (73) rigidement fixé au premier poteau (49) et par un second bord (75) lié au second poteau (49) par une liaison glissante (77) conférant deux degrés de liberté au panneau (51) par rapport au second poteau (49), en translation parallèlement au fond (19) et en translation parallèlement au second poteau (49).

5. Réacteur nucléaire selon l'une quelconque des revendications 1 à 4, **caractérisé en ce que** le dispositif de filtration (39) comporte, pour chaque panneau filtrant (51), un rail (79) fixé au fond (19), un bord inférieur (81) dudit panneau filtrant (51) étant engagé dans le rail (79) et étant libre de coulisser le long du rail (79).

6. Réacteur nucléaire selon l'une quelconque des revendications précédentes, **caractérisé en ce que** le dispositif de filtration (39) comporte une paroi filtrante annexe (85) définissant avec la paroi filtrante (47) un volume de filtration annexe (87) interposé en aval du volume de filtration (45) entre l'ouverture (37) et l'aspiration de l'organe de transfert du circuit (33) de refroidissement d'urgence du cœur, la paroi filtrante (45) ayant une première maille, la paroi filtrante annexe (85) ayant une seconde maille plus fine que la première.

7. Réacteur nucléaire selon l'une quelconque des revendications précédentes, **caractérisé en ce que** le réservoir (15) comporte plusieurs ouvertures (37), le volume filtrant (45) s'étendant sous chaque ouverture (37) et étant ouvert vers chaque ouverture (37), le volume filtrant (45) définissant un espace entièrement communiquant.

8. Réacteur nucléaire selon l'une quelconque des revendications précédentes, **caractérisé en ce que** la cuve (5) est logé dans un puits délimité par une paroi à contour fermé (9), le réservoir (5) entourant la paroi à contour fermé (9) et le volume filtrant (45) étant délimité du premier côté par ladite paroi à contour fermé (9).

9. Réacteur nucléaire selon l'une quelconque des revendications précédentes, **caractérisé en ce que** le réservoir (15) est délimité par un plafond (17), la ou chaque ouverture (37) étant ménagée dans le plafond (17).

## Patentansprüche

1. Kernreaktor (1) mit:
- einem Reaktorgebäude (3),
- einem Behälter (5), der in dem Reaktorgebäude (3) untergebracht ist,
- einem Kern (7), der in dem Behälter (5) angeordnet ist und Kernbrennstoff-Anordnungen enthält,
- einem Reservoir (15) zum Speichern von Speicherwasser, das in dem Reaktorgebäude (3) angeordnet ist, wobei das Reservoir (15) von einem Boden (19) und von Seitenwänden (21, 9) begrenzt ist, wobei das Reservoir (15) wenigstens eine Öffnung (37) hat, die das Strömen eines Flüssigkeitsflusses in das Innere des Reservoirs (15) erlaubt im Falle eines Unfalls,
- einem Notfall-Kühlkreis (33) für den Kern (7), der ein Transfer-Organ (25) aufweist, das eine Absaugung in Fluidverbindung mit dem Reservoir (15) hat,
- einer Vorrichtung (39) zum Filtern des Flüssigkeitsflusses, die in dem Reservoir (15) angeordnet ist und die zwischen der Öffnung (37) und der Absaugung des Transfer-Organs (25) zwischengeordnet ist,
wobei die Vorrichtung zum Filtern (39) ein Filtervolumen (45) hat, das in dem Reservoir (15) unter der Öffnung (37) begrenzt ist und zu der Öffnung (37) hin offen ist, wobei das Filtervolumen (45) auf einer ersten Seite von der Seitenwand (9, 21) und auf einer zur ersten entgegengesetzten zweiten Seite von einer Filterwand (47) begrenzt ist, die sich bis zum Boden (19) erstreckt und an der Seitenwand (21, 9) fixiert ist,
wobei die Filterwand (47) aufweist eine Mehrzahl von Säulen (49), die starr an dem Boden (19) fixiert sind, und eine Mehrzahl von Filterplatten (51), die zwischen den Säulen (49) angeordnet und mit den Säulen (49) verbunden sind.

2. Kernreaktor gemäß Anspruch 1, **dadurch gekennzeichnet, dass** das Reservoir (15) begrenzt ist von einer Decke (17), wobei jede Säule (49) entlang einer Längsrichtung langgestreckt ist und ein unteres Längsende (53), das am Boden (19) befestigt ist, und ein oberes Längsende (55) hat, welches mittels einer oberen Verbindung (57) mit der Decke (17) verbunden ist, wobei die obere Verbindung (57) dem oberen Längsende (55) bezüglich der Decke (17) einen einzigen Freiheitgrad verleiht hinsichtlich einer Translation entlang der Längsrichtung.

3. Kernreaktor gemäß Anspruch 1 oder 2, **dadurch gekennzeichnet, dass** die Filtervorrichtung (39) für jede Säule (49) wenigstens eine Gelenkverbindung (61) der Säule (49) mit der Seitenwand (21, 9) aufweist, wobei die Gelenkverbindung (61) eine Stange (63) aufweist, die über ein Gelenk (65) mit der Seitenwand (21, 9) verbunden ist und über ein anderes Gelenk (67) mit der Säule (49) verbunden ist.

4. Kernreaktor gemäß irgendeinem der Ansprüche 1 bis 3, **dadurch gekennzeichnet, dass** jede Filterplatte (51) sich von einer ersten der Säulen (49) zu einer zweiten der Säulen (49) erstreckt, wobei die Filterplatte (51) begrenzt ist von einem ersten Rand (73), der starr an der ersten Säule (49) fixiert ist, und von einem zweiten Rand (75), der mit der zweiten Säule (49) verbunden ist mittels einer Gleitverbindung (77), die der Platte (51) bezüglich der zweiten Säule (49) zwei Freiheitsgrade verleiht hinsichtlich einer Translation parallel zum Boden (19) und einer Translation parallel zur zweiten Säule (49).

5. Kernreaktor gemäß irgendeinem der Ansprüche 1 bis 4, **dadurch gekennzeichnet, dass** die Filtervorrichtung (39) für jede Filterplatte (51) aufweist eine Schiene (79), die am Boden (19) befestigt ist, wobei ein unterer Rand (81) der Filterplatte (51) mit der Schiene (79) im Eingriff ist und entlang der Schiene (79) frei verschiebbar ist.

6. Kernreaktor gemäß irgendeinem der vorhergehenden Ansprüche, **dadurch gekennzeichnet, dass** die Filtervorrichtung (39) eine Neben-Filterwand (85) aufweist, die mit der Filterwand (47) ein Neben-Filtervolumen (87) definiert, das dem Filtervolumen (45) nachgeschaltet zwischen der Öffnung (37) und der Absaugung des Transfer-Organs des Notfall-Kühlkreises (33) des Kerns zwischengeordnet ist, wobei die Filterwand (45) eine erste Maschenweite hat, wobei die Neben-Filterwand (85) eine zweite Maschenweite hat, die kleiner als die erste ist.

7. Kernreaktor gemäß irgendeinem der vorhergehenden Ansprüche, **dadurch gekennzeichnet, dass** das Reservoir (15) mehrere Öffnungen (37) aufweist, wobei sich das Filtervolumen (45) unter jeder Öffnung (37) erstreckt und zu jeder Öffnung (37) hin offen ist, wobei das Filtervolumen (45) einen insgesamt kommunizierenden Raum definiert.

8. Kernreaktor gemäß irgendeinem der vorhergehenden Ansprüche, **dadurch gekennzeichnet, dass** der Behälter (5) in einem Schacht untergebracht ist, der von einer Wand mit geschlossener Kontur (9) begrenzt ist, wobei das Reservoir (5) die Wand mit geschlossener Kontur (9) umgibt und das Filtervolumen (45) auf der ersten Seite von der Wand mit geschlossener Kontur (9) begrenzt ist.

9. Kernreaktor gemäß irgendeinem der vorhergehenden Ansprüche, **dadurch gekennzeichnet, dass** das Reservoir (15) von einer Decke (17) begrenzt ist, wobei die oder jede Öffnung (37) in der Decke (17) ausgebildet ist.

## Claims

1. A nuclear reactor (1) comprising:
- a reactor building (3);
- a reactor vessel (5) housed within the reactor building (3);
- a core (7) disposed in the reactor vessel (5) and comprising nuclear fuel assemblies;
- a water storage tank (15) for storing water, situated in the reactor building (3), the tank (15) being delimited, by a base (19) and lateral walls (21, 9), the tank (15) having at least one opening (37) that allows for the flow of a stream of liquid into the interior of the tank (15) in the event of an accident;
- an emergency cooling circuit (33) for emergency cooling of the core (7), comprising a transfer member (25) having a suction inlet in fluid communication with the tank (15);
- a filtration device (39) for filtering the stream of liquid, disposed in the tank (15) and interposed between the opening (37) and the suction inlet of the transfer member (25);
the filtration device (39) comprising a filtering volume (45) delimited in the tank (15) under the opening (37), open towards the opening (37), the filtering volume (45) being delimited on a first side by the lateral wall (9, 21) and on a second side opposite to the first by a filtering wall (47) extending up to the base (19) and attached to the lateral wall (21, 9),
the filtering wall (47) including a plurality of posts (49) that are rigidly attached to the base (19), and a plurality of filtering panels (51) that are interposed between the posts (49) and connected to the posts (49).

2. A nuclear reactor according to claim 1, **characterised in that** the tank (15) is delimited by a ceiling (17), each post (49) being extended along a longitudinal direction and having a bottom longitudinal end (53) attached to the base (19) and a top longitudinal end (55) connected to the ceiling (17) by a top link (57), the top link (57) conferring a single degree of freedom to the top longitudinal end (55) relative to ceiling (17) in translational motion along the longitudinal direction.

3. A nuclear reactor according to claim 1 or 2, **characterised in that** the filtration device (39) comprises, for each post (49) at least one articulated connection (61) for connecting the post (49) to the lateral wall (21, 9), the articulated connection (61) comprising a rod (63) connected by means of an articulated joint (65) to the lateral wall (21, 9) and by another articulated joint (67) to the post (49).

4. A nuclear reactor according to any one of claims 1 to 3, **characterised in that** each filtering panel (51) extends from a first one of the posts (49) to a second one of the posts (49), the said filtering panel (51) being delimited by a first edge (73) that is rigidly attached to the first post (49) and by a second edge (75) that is connected to the second post (49) by means of a sliding connection (77) conferring two degrees of freedom to the panel (51) relative to the second post (49), in translational motion parallelly to the base (19) and in translational motion parallelly to the second post (49).

5. A nuclear reactor according to any one of claims 1 to 4, **characterised in that** the filtration device (39) comprises, for each filtering panel (51), a rail (79) that is attached to the base (19), a lower edge (81) of the said filtering panel (51) being engaged in the rail (79) and being free to slide along the rail (79).

6. A nuclear reactor according to any one of the preceding claims, **characterised in that** the filtration device (39) comprises an ancillary filtering wall (85) delimiting with the filtering wall (47) an ancillary filtering volume (87) that is interposed downstream from the filtering volume (45) between the opening (37) and the suction inlet of the transfer member of the emergency cooling circuit (33) for emergency cooling of the core, the filtering wall (45) having a first mesh, the ancillary filtering wall (85) having a second mesh that is finer than the first.

7. A nuclear reactor according to any one of the preceding claims, **characterised in that** the tank (15) comprises a plurality of openings (37), the filtering volume (45) extending below each opening (37) and being open towards each opening (37), the filtering volume (45) defining a space that is entirely in communication.

8. A nuclear reactor according to any one of the preceding claims, **characterised in that** the reactor vessel (5) is housed in a pit delimited by a closed contour wall (9), the tank (5) surrounding the closed contour wall (9) and the filtering volume (45) being delimited on the first side by the said closed contour wall (9).

9. A nuclear reactor according to any one of the preceding claims, **characterised in that** the tank (15) is delimited by a ceiling (17), the or each opening (37) being formed in the ceiling (17).
